(19) Europäisches Patentamt / European Patent Office / Office européen des brevets

(11) **EP 3 067 838 A1**

(12) **EUROPEAN PATENT APPLICATION**
published in accordance with Art. 153(4) EPC

(43) Date of publication:
**14.09.2016 Bulletin 2016/37**

(51) Int Cl.:
***G06Q 10/00*** *(2012.01)*

(21) Application number: **13896923.3**

(22) Date of filing: **07.11.2013**

(86) International application number:
**PCT/JP2013/080149**

(87) International publication number:
**WO 2015/068242 (14.05.2015 Gazette 2015/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventor: **NAKAZAWA, Katsuhito**
**Kawasaki-shi**
**Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **INFORMATION PROCESSING METHOD, INFORMATION PROCESSING DEVICE, AND INFORMATION PROCESSING PROGRAM**

(57) An information processing method includes, calculating, performed by a computer, a cost of a first process on the basis of a number of processes performed by the first process and a cost database that stores therein a unit price of cost factors; calculating, performed by the computer, a cost of a second process on the basis of the number of processes performed by, instead of the first process, the second process that is performed by an ICT apparatus and the cost database; and calculating, performed by the computer, an introduction level of the second process needed for cost reduction on the basis of the cost of the first process and the cost of the second process.

FIG.1

**Description**

[Technical Field]

The embodiment discussed herein is directed to an information processing method, an information processing apparatus, and an information processing program.

[Background Art]

Conventionally, an Information and Communications Technology (ICT) is introduced in various kinds of fields in order to reduce costs as one of the aims. The effect of the cost reduction obtained from the ICT introduction can be calculated by comparing an ICT introduction level that indicates the number of processes or the like performed by ICT users using the ICT before and after the ICT introduction and the costs needed before and after the ICT introduction. In order to conduct a long-term cost reduction by using the ICT introduction, the ICT introduction is conducted by planning and designing, for each term, the relationship between the ICT introduction level that indicates the number of processes or the like performed by the ICT users using the ICT and the cost reduction. Furthermore, an evaluation of the environmental load due to the ICT introduction is also evaluated at the time before and after the ICT introduction.

[Citation List]

[Patent Citation]

Patent Literature 1: Japanese Laid-open Patent Publication No. 2003-58698
Patent Literature 2: Japanese Laid-open Patent Publication No. 2005-182451

[Summary of Invention]

[Technical Problem]

However, it is difficult to calculate the ICT introduction level needed for the cost reduction plan. Namely, in order to implement a certain cost reduction plan, it is not able to calculate the degree of introduction of the ICT.
Accordingly, it is an object in one aspect of an embodiment of the present invention to provide an information processing method, an information processing apparatus, and an information processing program that can calculate an ICT introduction level needed for a cost reduction plan.

[Solution to Problem]

According to an aspect of an embodiment, an information processing method includes, calculating, performed by a computer, a cost of a first process on the basis of a number of processes performed by the first process and a cost database that stores therein a unit price of cost factors; calculating, performed by the computer, a cost of a second process on the basis of the number of processes performed by, instead of the first process, the second process that is performed by an ICT apparatus and the cost database; and calculating, performed by the computer, an introduction level of the second process needed for cost reduction on the basis of the cost of the first process and the cost of the second process.

[Advantageous Effects of Invention]

It is possible to calculate an ICT introduction level needed for a cost reduction plan.

[Brief Description of Drawings]

FIG. 1 is a block diagram illustrating an example of the configuration of an information processing apparatus according to an embodiment.
FIG. 2 is a schematic diagram illustrating an example of a cost database.

FIG. 3 is a schematic diagram illustrating an example of an environmental load database.

FIG. 4 is a schematic diagram illustrating an example of a basic data storing unit.

FIG. 5 is a schematic diagram illustrating an example of a result storing unit.

FIG. 6 is a schematic diagram illustrating an example of the relationship among a cost factor, an amount of activity, and a cost.

FIG. 7 is a schematic diagram illustrating an example of the relationship among a cost factor, an amount of activity, and an environmental load.

FIG. 8 is a flowchart illustrating an example of a process performed by the information processing apparatus according to the embodiment.

FIG. 9 is a flowchart illustrating an example of a cost calculation process.

FIG. 10 is a flowchart illustrating an example of an environmental load calculation process.

FIG. 11 is a graph illustrating an example of a change due to the time of each of the cost factors.

FIG. 12 is a graph illustrating an example of the cost reduction effect due to ICT introduction.

FIG. 13 is a graph illustrating an example of a change due to the time of each of the $CO_2$ factors.

FIG. 14 is a graph illustrating an example of the $CO_2$ reduction effect due to the ICT introduction.

FIG. 15 is a graph illustrating an example of the cost reduction effect due to an introduction of an energy saving server.

FIG. 16 is a graph illustrating an example of the $CO_z$ reduction effect due to the introduction of the energy saving server.

FIG. 17 is a block diagram illustrating an example of a computer that executes an information processing program.

[Embodiments for Carrying Out the Invention]

Preferred embodiment of an information processing method, an information processing apparatus, and an information processing program disclosed in the present invention will be described in detail below with reference to the accompanying drawings. Furthermore, the disclosed technology is not limited to the embodiment. Furthermore, the embodiment described below may also be used in any appropriate combination as long as the processes do not conflict with each other. Embodiment

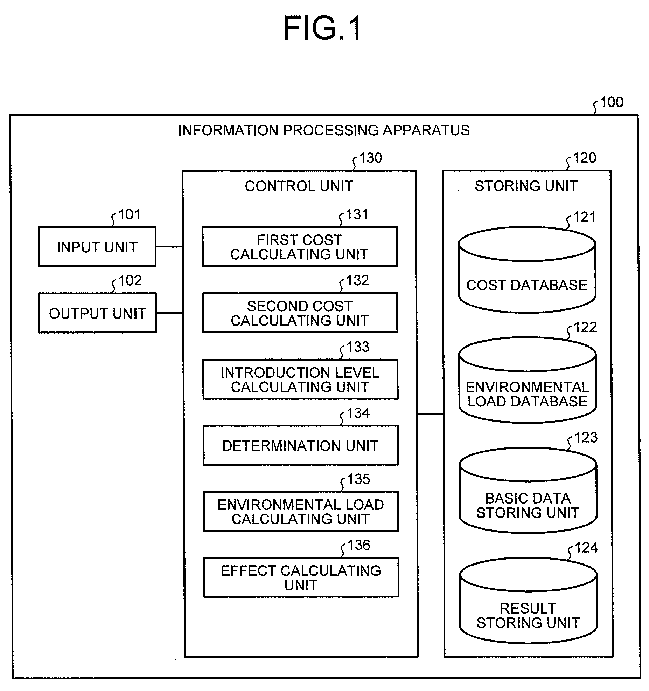

FIG. 1 is a block diagram illustrating an example of the configuration of an information processing apparatus according to an embodiment. An information processing apparatus 100 illustrated in FIG. 1 includes an input unit 101, an output unit 102, a storing unit 120, and a control unit 130.

To the input unit 101, the total number of processes X of the target business that is performed before ICT introduction and in which the ICT is introduced; an amount of use items needed to perform the subject business; an amount of activity, such as the number of task steps, electrical power consumption, or the like; and a target cost reduction rate R are input. Furthermore, to the input unit 101, a time delay coefficient related to the environmental load; a calculation period and the number of times calculation is performed are input. The input unit 101 outputs, to the control unit 130, the input total number of processes X, the amount of activity, the cost reduction rate R, the time delay coefficient, the calculation period, and the number of times calculation is performed. Furthermore, if basic data that serves as the base of calculation of a cost is input, the input unit 101 stores the basic data in a basic data storing unit 123, which will be described later, via the control unit 130. Furthermore, the input unit 101 accepts an input of an instruction to start a process performed by a user and inputs the instruction content to the control unit 130. Furthermore, the input unit 101 corresponds to, a keyboard, a mouse, a medium reading device, or the like. Furthermore, if a pre-introduction unit price Bc and a post-introduction unit price Ac are input, the input unit 101 outputs the input pre-introduction unit price Bc and the post-introduction unit price Ac to the control unit 130.

The output unit 102 outputs a graph on the basis of result data of the ICT introduction level, effect data that indicates the effect obtained before and after the ICT introduction, and result data. The output unit 102 outputs the graph on the basis of the effect data calculated by an effect calculating unit 136, which will be described later, in the control unit 130 and the result data to a displaying unit, which is not illustrated, or the like, such as a liquid crystal display or the like and displays the graph. Furthermore, the output unit 102 stores the graph on the basis of the effect data and the result data in the storing unit 120 or may also store the graph in a recording medium by using a medium writing device.

The storing unit 120 is implemented by, for example, a semiconductor memory device, such as a random access memory (RAM), a flash memory, and the like, or a storage device, such as a hard disk, an optical disk, and the like. The storing unit 120 includes a cost database (hereinafter, referred to as a cost DB) 121, an environmental load database (hereinafter, referred to as an environmental load DB) 122, the basic data storing unit 123, and a result storing unit 124. Furthermore, the storing unit 120 stores therein information that is used for the process performed in the control unit 130. Furthermore, the storing unit 120 may also store the total number of processes X, the amount of activity, the cost reduction rate R, the pre-introduction unit price Bc, and the post-introduction unit price Ac that are input from the input unit 101. Furthermore, the storing unit 120 may also store the graph on the basis of the effect data and the result data.

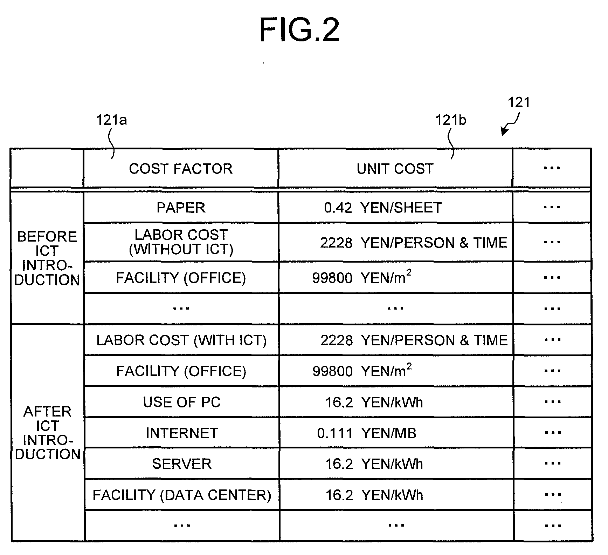

The cost DB 121 stores therein, in an associated manner, the cost factor and the unit cost that is the cost of the cost factor per unit. FIG. 2 is a schematic diagram illustrating an example of a cost database. As illustrated in FIG. 2, the cost DB 121 has the items, such as a cost factor 121 a and a unit cost 121 b.

The cost factor 121 a indicates, for example, a sheet of paper, a labor cost (without ICT), a facility (office), or the like that are before ICT introduction and indicates, for example, a labor cost (with ICT), a facility (office), the use of PC, the Internet, a server, a facility (data center) or the like that are after ICT introduction. The unit cost 121 b indicates a cost per sheet in a case of, for example, a sheet of paper before ICT introduction and indicates a cost per 1 kWh in a case of a server after ICT introduction.

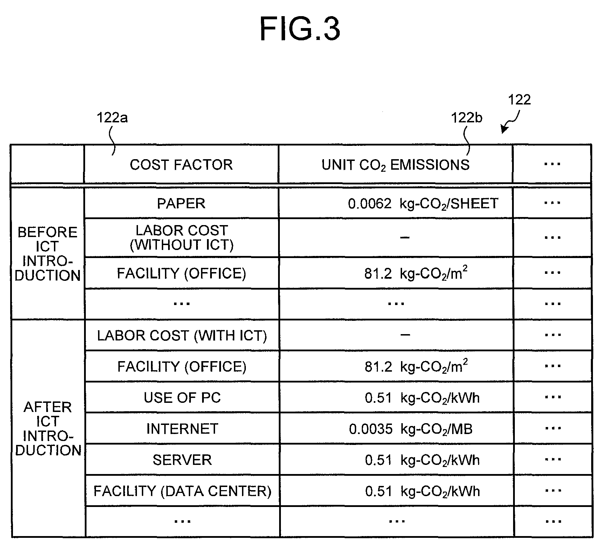

The environmental load DB 122 stores therein, in an associated manner, the cost factor and the unit $CO_2$ emissions that is an example of the environmental load per unit of the cost factor. In other words, the environmental load DB 122 stores therein, in an associated manner, the cost factor and the basic unit data for converting energy consumption to an environmental load. FIG. 3 is a schematic diagram illustrating an example of an environmental load database. As illustrated in FIG. 3, the environmental load DB 122 has the items, such as a cost factor 122a and a unit $CO_2$ emissions 122b.

The cost factor 122a is the same as the cost factor 121 a in the cost DB 121. The unit $CO_2$ emissions 122b indicates $CO_2$ emissions per page in a case of, for example, a sheet of paper before ICT introduction and indicates the $CO_2$ emissions per 1 kWh in a case of, for example, a server after ICT introduction.

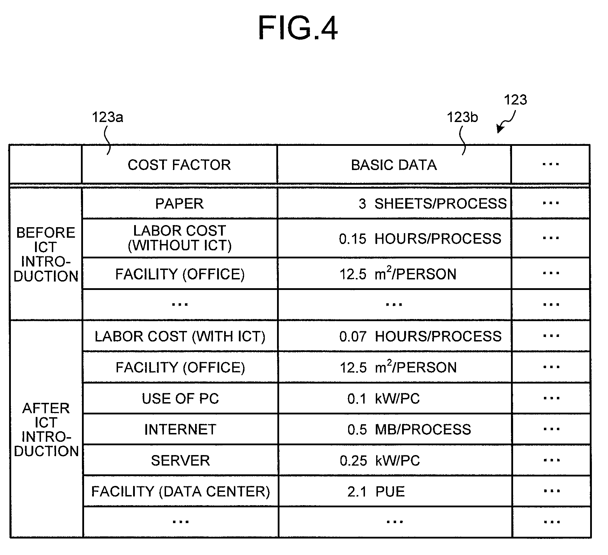

The basic data storing unit 123 stores therein, in an associated manner, the cost factor and the basic data that is the data that serves as the base of calculation of a cost. FIG. 4 is a schematic diagram illustrating an example of a basic data storing unit. As illustrated in FIG. 4, the basic data storing unit 123 has the items, such as a cost factor 123a and a basic data 123b.

The cost factor 123a is the same as the cost factor 121a in the cost DB 121. The basic data 123b indicates the number of sheets needed for one process in a case of, for example, a sheet of paper before ICT introduction and indicates electrical power consumed per device in a case of a server after ICT introduction.

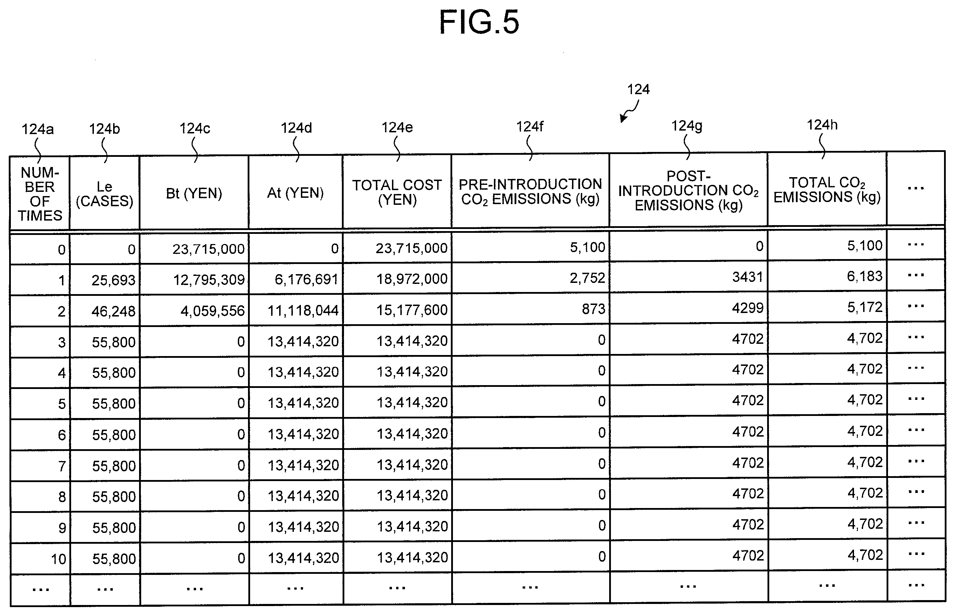

The result storing unit 124 stores therein calculation results obtained by a first cost calculating unit 131, a second cost calculating unit 132, and an introduction level calculating unit 133, and an environmental load calculating unit 135. The result storing unit 124 stores therein the calculation result for each number of times of calculation of an ICT introduction level Le. FIG. 5 is a schematic diagram illustrating an example of a result storing unit. As illustrated in FIG. 5, the result storing unit 124 has items, such as a number of times 124a, an Le 124b, a Bt 124c, an At 124d, a total cost 124e, a pre-introduction $CO_2$ emissions 124f, a post-introduction $CO_2$ emissions 124g, and a total $CO_2$ emissions 124h.

The number of times 124a indicates the number of times of calculation of the ICT introduction level Le. The Le 124b indicates the calculated ICT introduction level Le. The Bt 124c indicates the pre-introduction cost Bt of the calculated ICT. The At 124d indicates the post-introduction cost At of the calculated ICT. The total cost 124e indicates the calculated total cost. The pre-introduction $CO_2$ emissions 124f indicates the $CO_2$ emissions of the calculated ICT before the introduction. The post-introduction $CO_2$ emissions 124g indicates the $CO_2$ emissions of the calculated ICT after the introduction. The total $CO_2$ emissions 124h indicates the total $CO_2$ emissions that is the sum of the $CO_2$ emissions before the ICT introduction and the $CO_2$ emissions after the ICT introduction.

A description will be given here by referring back to FIG. 1. The control unit 130 is implemented by, for example, a central processing unit (CPU), a micro processing unit (MPU), or the like executing, in a RAM as a work area, the program that is stored in an inner storage device. Furthermore, the control unit 130 may also be implemented by an integrated circuit, such as an application specific integrated circuit (ASIC), a field programmable gate array (FPGA), or the like. The control unit 130 includes the first cost calculating unit 131, the second cost calculating unit 132, the introduction level calculating unit 133, a determination unit 134, the environmental load calculating unit 135, and the effect calculating unit 136 and implements or performs the function or the operation of the information processing described below. Furthermore, the internal configuration of the control unit 130 is not limited to the configuration illustrated in FIG. 1 but may also be another configuration as long as the information processing, which will be described later, is performed.

To the first cost calculating unit 131, the total number of processes X and the amount of activity are input from the input unit 101. Furthermore, to the first cost calculating unit 131, the ICT introduction level Le is input from the determination unit 134. Furthermore, if the ICT introduction level Le has not been calculated, zero that is the initial value is set in the first cost calculating unit 131 as the ICT introduction level Le. The first cost calculating unit 131 refers to the cost DB 121 and the basic data storing unit 123 and calculates the pre-introduction cost Bt on the basis of the number of processes, which is obtained by subtracting the ICT introduction level Le from the total number of processes X, the amount of activity, and the basic data. Furthermore, the number of processes that is obtained by subtracting the ICT introduction level Le from the total number of processes X is the number of processes performed before the ICT introduction and if the number of processes obtained by the first process.

Furthermore, the first cost calculating unit 131 calculates the pre-introduction unit price Bc of ICT on the basis of the calculated pre-introduction cost Bt and the number of processes that is used to calculate the pre-introduction cost Bt. Furthermore, the first cost calculating unit 131 may also use, as the pre-introduction unit price Bc, the input pre-introduction unit price Bc. The first cost calculating unit 131 outputs the calculated pre-introduction cost Bt and the pre-introduction unit price Bc to the introduction level calculating unit 133. Furthermore, the first cost calculating unit 131 stores the calculated pre-introduction cost Bt in the result storing unit 124.

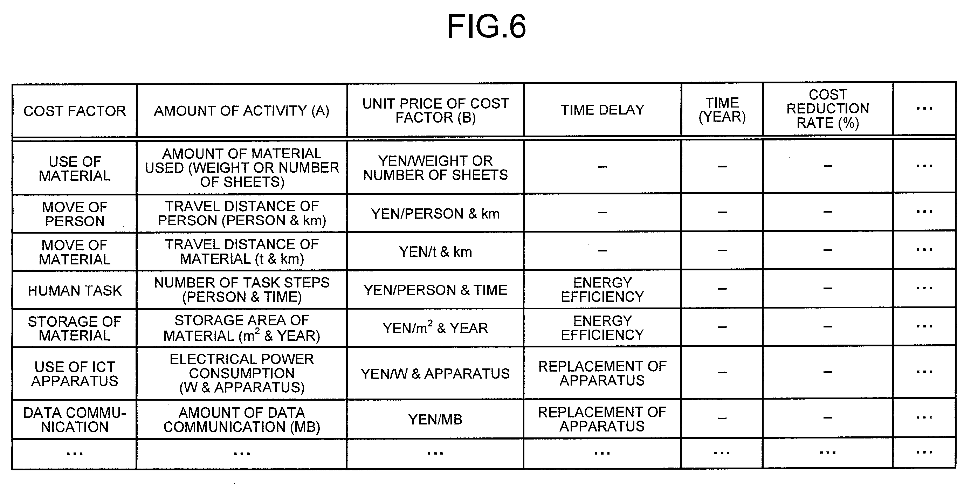

In the following, calculation of a cost for each cost factor will be described with reference to FIG. 6. FIG. 6 is a schematic diagram illustrating an example of the relationship among a cost factor, an amount of activity, and a cost. As illustrated in FIG. 6, in a case of, for example, the cost factor of the "use of material", the cost is calculated on the basis of an "amount of material used (weight or the number of sheets)" that is the amount of activity (A) and on the basis of "Yen/(weight or the number of sheets)" (Yen indicates an amount of money) that is the unit price (B) of the cost factor. Namely, the cost is calculated from the amount of activity (A)×the unit price (B) of the cost factor. Here, it is assumed that the amount of activity is input by a user and the unit price (B) of the cost factor is obtained by referring to the cost DB 121. The pre-introduction cost Bt is calculated by summing up the cost calculated for each cost factor.

Furthermore, the cost can be calculated by taking into consideration the time delay that indicates the effect of a change that occurs at the time defined by a user. The calculation of the cost performed by taking into consideration the time delay is calculated such that, for example, if the cost calculation period is set to 10 years and if a server is replaced, after 5 years since the commencement of the ICT introduction, with a server in which the energy is saved by 10%, a cost is calculated, for the years from 0 to 5, from the amount of activity (A)×the unit price (B) of the cost factor. Furthermore, for the years from 6 to 10, a cost is calculated from the amount of activity (A)×the unit price (B) of the cost factor×0.9. If this case is applied to the example illustrated in FIG. 6, the item "time delay" indicates replacement of the apparatuses, the item "time (year)" indicates 5 years, and the item "cost reduction rate (%)" indicates 10%.

A description will be given here by referring back to FIG. 1. To the second cost calculating unit 132, the amount of activity is input from the input unit 101. Furthermore, to the second cost calculating unit 132, the ICT introduction level Le is input from the determination unit 134. Furthermore, if the ICT introduction level Le has not been calculated, in the second cost calculating unit 132, similarly to the first cost calculating unit 131, zero that is the initial value is set as the ICT introduction level Le. The second cost calculating unit 132 refers to the cost DB 121 and the basic data storing unit 123 and calculates the post-introduction cost At on the basis of the number of processes of the ICT introduction level Le, the amount of activity, and the basic data. Furthermore, the number of processes of the ICT introduction level Le is the number of processes performed after the ICT introduction and, in other words, the number of processes performed by the second process by the ICT apparatus, instead of the first process.

Furthermore, the second cost calculating unit 132 calculates the post-introduction unit price Ac of ICT on the basis of the calculated post-introduction cost At and the number of processes that are used to calculate the post-introduction cost At. Furthermore, the second cost calculating unit 132 may also use, as the post-introduction unit price Ac, the input post-introduction unit price Ac. The second cost calculating unit 132 outputs the calculated post-introduction cost At and the post-introduction unit price Ac of ICT to the introduction level calculating unit 133. Furthermore, the second cost calculating unit 132 stores the calculated post-introduction cost At in the result storing unit 124.

The introduction level calculating unit 133 calculates the ICT introduction level Le needed for cost reduction. To the introduction level calculating unit 133, the total number of processes X and the cost reduction rate R are input from the input unit 101. Furthermore, to the introduction level calculating unit 133, the pre-introduction cost Bt and the pre-introduction unit price Bc are input from the first cost calculating unit 131. Furthermore, to the introduction level calculating unit 133, the post-introduction cost At and the post-introduction unit price Ac are input from the second cost calculating unit 132. If the total number of processes X, the cost reduction rate R, the pre-introduction cost Bt, the pre-introduction unit price Bc, the post-introduction cost At, and the post-introduction unit price Ac are input to the introduction level calculating unit 133, the introduction level calculating unit 133 calculates the ICT introduction level Le by using Equation (1) below.

$$ Le = \{(Bt + At) \times (1 - R) - Bc \cdot X\} / (Ac - Bc) \qquad (1) $$

Here, the equation (1) that is used to calculate the ICT introduction level Le can be obtained on the basis of Equation (2) and Equation (3) below. Furthermore, the introduction level calculating unit 133 calculates the total cost as the sum of the pre-introduction cost Bt and the post-introduction cost At. The introduction level calculating unit 133 outputs the calculated ICT introduction level Le to the determination unit 134 and the environmental load calculating unit 135. Furthermore, the introduction level calculating unit 133 stores the calculated ICT introduction level Le and the total cost in the result storing unit 124.

$$\langle \text{NEXT TOTAL COST} \rangle = \langle \text{NEXT PRE - INTRODUCTION COST} \rangle + \langle \text{NEXT POST - INTRODUCTION COST} \rangle \tag{2}$$

$$
\begin{aligned}
(Bt + At) \times (1 - R) &= Bc \times (X - Le) + Ac \times Le \\
&= Bc \cdot X - Bc \cdot Le + Ac \cdot Le \qquad (3) \\
&= Le(Ac - Bc) + Bc \cdot X
\end{aligned}
$$

To the determination unit 134, the calculation period and the number of calculations are input from the input unit 101. The determination unit 134 determines, on the basis of the calculation period and the number of calculations, the number of repetition of calculation of the ICT introduction level Le. If the ICT introduction level Le is input from the introduction level calculating unit 133, the determination unit 134 increments i that counts the number of calculations (i=i+1) and determines whether the calculation of the ICT introduction level Le for each period is repeated a predetermined number of times. Namely, if, for example, the calculation period is set to 10 years and the term is set to one year, the determination unit 134 determines whether calculation of the ICT introduction level Le was performed at an interval of one year and determines whether calculation of the ICT introduction level Le, for example, 10 times as a predetermined number of times, i.e., an amount of calculation corresponding to the calculation for 10 years, was performed. If the calculation of the ICT introduction level Le is not repeated by the predetermined number of times, the determination unit 134 outputs the ICT introduction level Le to the first cost calculating unit 131 and the second cost calculating unit 132. Furthermore, the determination unit 134 stores the number of repetitions in the result storing unit 124. If the calculation of the ICT introduction level Le was repeated by the predetermined number of times, the determination unit 134 instructs the effect calculating unit 136 to calculate the effect.

The environmental load calculating unit 135 calculates an environmental load that is in accordance with the ICT introduction level Le. To the environmental load calculating unit 135, the total number of processes X, the amount of activity, and the time delay coefficient are input from the input unit 101. Furthermore, to the environmental load calculating unit 135, the ICT introduction level Le is input from the introduction level calculating unit 133. When the ICT introduction level Le is input to the environmental load calculating unit 135 from the introduction level calculating unit 133, the environmental load calculating unit 135 calculates energy consumption before and after the ICT introduction on the basis of both the amount of activity in accordance with the ICT introduction level Le and the time delay coefficient related to the environmental load. The environmental load calculating unit 135 calculates, as an environmental load on the basis of both the calculated energy consumption before and after the ICT introduction and the basic unit data for converting the amount of energy stored in the environmental load DB 122 to the environmental load, for example, pre-introduction $CO_2$ emissions and post-introduction $CO_2$ emissions of ICT. The environmental load calculating unit 135 calculates the total $CO_2$ emissions as the sum of the calculated pre-introduction $CO_2$ emissions and the post-introduction $CO_2$ emissions. The environmental load calculating unit 135 stores the calculated pre-introduction $CO_2$ emissions, the post-introduction $CO_2$ emissions, and the total $CO_2$ emissions in the result storing unit 124.

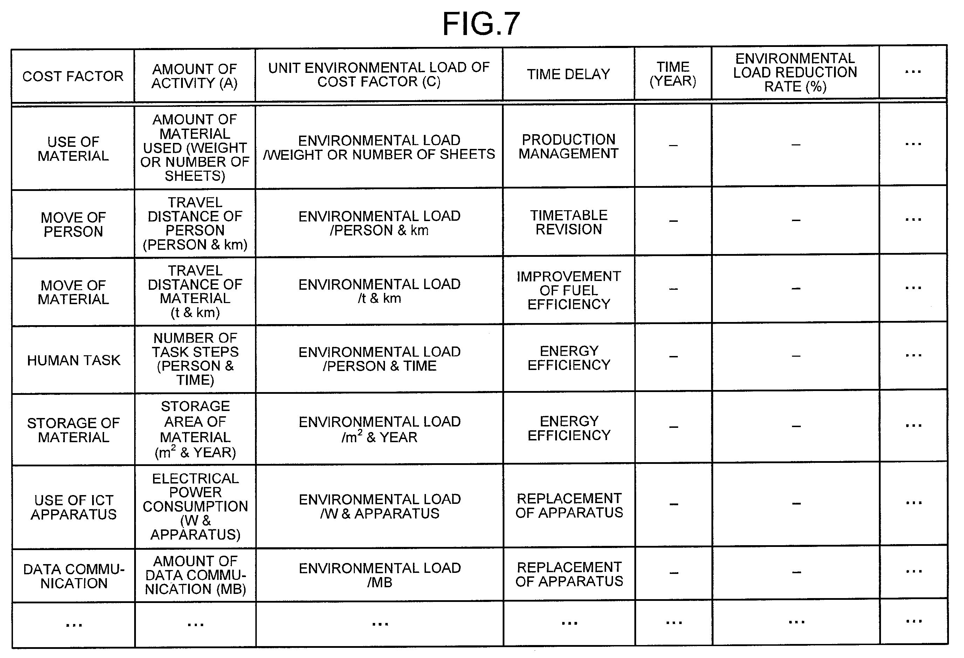

In the following, calculation of an environmental load for each cost factor will be described with reference to FIG. 7. FIG. 7 is a schematic diagram illustrating an example of the relationship among a cost factor, an amount of activity, and an environmental load. As illustrated in FIG. 7, in a case of, for example, the cost factor of the "use of material", the environmental load is calculated on the basis of an "amount of material used (weight or the number of sheets)" that is the amount of activity (A) and on the basis of the "environmental load/(weight or the number of sheets)" that is the unit environmental load (C) of the cost factor. Namely, the environmental load is calculated from the amount of activity (A)×the unit environmental load (C) of the cost factor. For the environmental load, for example, $CO_2$ emissions can be used. Here, it is assumed that the amount of activity is input by a user and the environmental load (C) of the cost factor is obtained by referring to the environmental load DB 122. The pre-introduction $CO_2$ emissions and the post-introduction $CO_2$ emissions are calculated by summing up the environmental load calculated for each cost factor.

Furthermore, similarly to the cost, the environmental load can be calculated by taking into consideration the time delay that indicates the effect of a change that occurs at the time defined by a user. The calculation of the environmental load performed by taking into consideration the time delay is calculated such that, for example, if the calculation period of the environmental load is set to 10 years and if a server is replaced, after 5 years since the commencement of the ICT introduction, with a server in which the energy is saved by 10%, the environmental load is calculated from the amount of activity (A)×the unit environmental load (C) of the cost factor from 0 to 5 years. Furthermore, for the years from 6 to 10, the environmental load is calculated from the amount of activity (A)×the unit environmental load (C) of the cost factor×0.9. If this case is applied to the example illustrated in FIG. 7, the item "time delay" indicates replacement of the apparatuses, the item "time (year)" indicates 5 years, and the item "environmental load reduction rate (%)" indicates 10%. Another example of calculating the environmental load taking into consideration the time delay includes, in addition to the above, the time delay from a decrease in the amount of paper used until a decrease in the amount of production, the time delay starting from a decrease in frequency in the use of train in accordance with a decrease in the number of business trips due to practical use of video conference until a decrease in number of trains due to timetable revision, or the like.

When the effect calculating unit 136 receives an instruction to calculate the effect from the determination unit 134, the effect calculating unit 136 creates the effect data that indicates the effect before and after the ICT introduction. The effect calculating unit 136 calculates, on the basis of the calculated cost and the environmental load, the effect by comparing, for example, a case in which ICT is not introduced and a case in which ICT is introduced at a predetermined ICT introduction level. To the effect calculating unit 136, the calculation period is input from the input unit 101. The effect calculating unit 136 reads, from the result storing unit 124, the pre-introduction cost Bt, the post-introduction cost At, the total cost, the pre-introduction $CO_2$ emissions, the post-introduction $CO_2$ emissions, and the total $CO_2$ emissions and creates various kinds of graphs on the basis of the calculation periods. The effect calculating unit 136 creates, by using, for example, the pre-introduction cost Bt and the total cost, each of the graphs of, for example, 10 years as the calculation period.

The effect calculating unit 136 calculates, by, for example, integrating, both an area of a graph in the calculation period when the cost is pre-introduction cost Bt and is not changed and an area of a graph of the total cost in a calculation period when ICT is introduced. The effect calculating unit 136 calculates, on the basis of each of the calculated areas, the result of a cost reduction rate that indicates an amount of cost reduced if ICT is introduced. Namely, the effect calculating unit 136 calculates the result of the cost reduction rate on the basis of the ratio of the area of the graph about the cost when ICT is not introduced to the area of the graph about the cost when ICT is introduced and creates effect data that indicates the effect before and after the ICT introduction.

The effect calculating unit 136 outputs, for example, the pre-introduction cost Bt, the post-introduction cost At, the total cost, the pre-introduction $CO_2$ emissions, the post-introduction $CO_2$ emissions, and the total $CO_2$ emissions to the output unit 102 as the result data of the ICT introduction level. Furthermore, the effect calculating unit 136 outputs various kinds of graphs created on the basis of the result data and the created effect data to the output unit 102.

In the following, the operation of the information processing apparatus 100 according to the embodiment will be described.

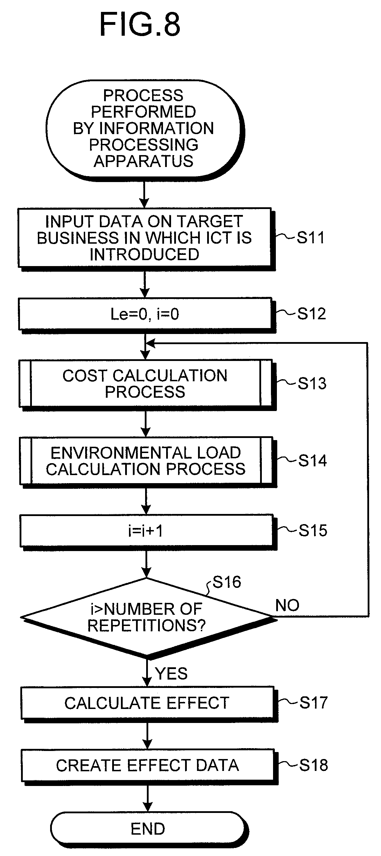

FIG. 8 is a flowchart illustrating an example of a process performed by the information processing apparatus according to the embodiment. Here, as an example of a process performed by the information processing apparatus 100, a description will be given of a case in which the target business is an introduction case example of a clerical work support service. It is assumed that, as the precondition of the clerical work support service, the number of occurrences of application processes related to personnel, general affairs, laboring in a business office with 1100 employees is 55800 per year. Furthermore, it is assumed that a clerical work that is processed by using paper is performed before the ICT introduction and assumed that the clerical work is operated for years after the commencement of the introduction of the clerical work support service that uses ICT.

In a paper application process scenario of the pre-ICT introduction, clerical workers (4 persons) perform processes by writing paper slips (3 sheets/application) by hand and filing the slips. In the electronic application process scenario of the post-ICT introduction, clerical workers (2 persons) process data (0.5 MB) electronically applied by each employee using a PC (personal computer: electrical power consumption 100 W). Furthermore, it is assumed that, in the electronic application process scenario, the operation is performed by servers (24 hours×365 days operation and electrical power consumption of 250 W/server) in a data center and assumed that the data center efficiency (PUE) of the servers is 2.1. Furthermore, it is assumed that the target cost reduction rate R is 20%. The PUE can be calculated by dividing the total amount of electrical power consumption in the data center by an amount of the electrical power consumption of the servers.

In the information processing apparatus 100, as data of the target business in which ICT is introduced, the total number of processes X, the amount of activity, the cost reduction rate R, the time delay coefficient, the basic data, the calculation period, and the number of calculations are input by a user to the input unit 101 (Step S11). To the information processing apparatus 100, as the total number of processes X, for example, 55800 that is the number of application processes are input. Furthermore, to the information processing apparatus 100, a previously calculated amount of activity is input as the amount of activity on the basis of, for example, the cost DB 121 illustrated in FIG. 2, the environmental load DB 122 illustrated in FIG. 3, and the basic data storing unit 123 illustrated in FIG. 4. Furthermore, the amount of activity may also be calculated in the information processing apparatus 100 on the basis of the cost DB 121, the environmental load DB 122, and the basic data storing unit 123 that are previously input by a user.

Furthermore, to the information processing apparatus 100, 20% is input as the cost reduction rate R, "nil" is input as the time delay coefficient, 10 years is input as the calculation period, and 10 times is input as the number of calculations. Furthermore, to the information processing apparatus 100, the data indicated in the basic data storing unit 123 illustrated in FIG. 4 is input as the basic data.

In the information processing apparatus 100, when the data on the target business in which ICT is introduced is input to the input unit 101, 0 is set as the initial value in the ICT introduction level Le and 0 is set in i that counts the number of calculations obtained by the determination unit 134 (Step S12). Furthermore, the determination unit 134 determines, on the basis of calculation period and the number of calculations input from the input unit 101, the number of repetitions of calculation of the ICT introduction level Le.

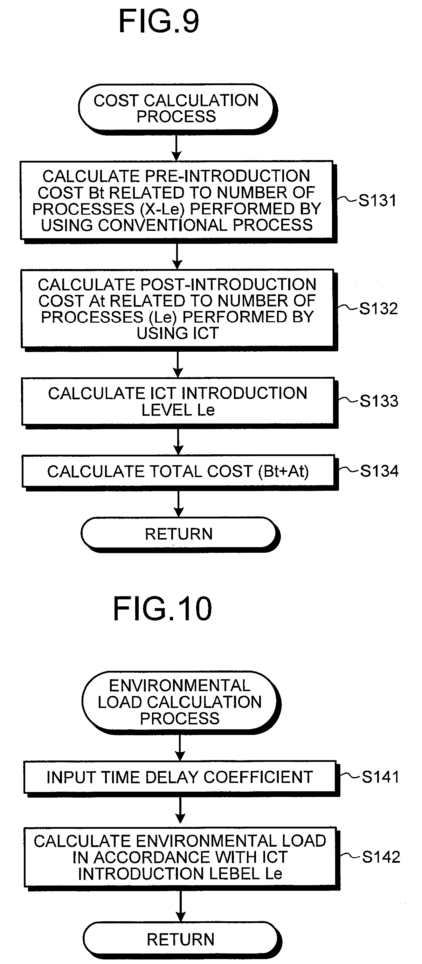

When the setting of the initial value has been completed, the information processing apparatus 100 performs the cost calculation process (Step S13). Here, the cost calculation process will be described with reference to FIG. 9. FIG. 9 is a flowchart illustrating an example of a cost calculation process.

First, to the first cost calculating unit 131 in the information processing apparatus 100, the total number of processes X and the amount of activity are input from the input unit 101. Furthermore, to the first cost calculating unit 131, the ICT introduction level Le is input from the determination unit 134. Furthermore, to the first cost calculating unit 131, if the ICT introduction level Le has not been calculated, i.e., if calculation of the ICT introduction level Le is first time, 0 is set as the ICT introduction level Le.

The first cost calculating unit 131 calculates the pre-introduction cost Bt related to the number of processes (X-Le) performed by using conventional process (Step S131). Namely, the first cost calculating unit 131 refers to the cost DB 121 and the basic data storing unit 123 and calculates the pre-introduction cost Bt on the basis of the number of processes, which is obtained by subtracting the ICT introduction level Le from the total number of processes X, the amount of activity, and the basic data. Furthermore, the first cost calculating unit 131 calculates the pre-introduction unit price Bc of ICT on the basis of the calculated pre-introduction cost Bt and the number of processes that is used to calculate the pre-introduction cost. The first cost calculating unit 131 outputs the calculated pre-introduction cost Bt and the pre-introduction unit price Bc to the introduction level calculating unit 133. Furthermore, the first cost calculating unit 131 stores the calculated pre-introduction cost Bt in the result storing unit 124. Here, in the example illustrated in FIG. 5, if the number of times is "1 ", for example, the pre-introduction cost Bt is calculated to 12,795,309 Yen and, for example, the pre-introduction unit price Bc is calculated to 425 yen.

Then, to the second cost calculating unit 132, the amount of activity is input from the input unit 101 and the ICT introduction level Le is input from the determination unit 134. Furthermore, if the ICT introduction level Le has not been calculated, i.e., if calculation of the ICT introduction level Le is first time, similarly to the first cost calculating unit 131, 0 is set in the second cost calculating unit 132 as the ICT introduction level Le.

The second cost calculating unit 132 calculates the post-introduction unit price Ac related to the number of processes (Le) performed by using ICT (Step S132). Namely, the second cost calculating unit 132 refers to the cost DB 121 and the basic data storing unit 123 and calculates the post-introduction cost At on the basis of the number of processes of the ICT introduction level Le, the amount of activity, and the basic data. Furthermore, the second cost calculating unit 132 calculates the post-introduction unit price Ac of ICT on the basis of the calculated post-introduction cost At and the number of processes that is used to calculate the post-introduction cost At. The second cost calculating unit 132 outputs the calculated post-introduction cost At and the post-introduction unit price Ac of ICT to the introduction level calculating unit 133. Furthermore, the second cost calculating unit 132 stores the calculated post-introduction cost At in the result storing unit 124. Here, in the example illustrated in FIG. 5, if the number of times is "1", for example, the post-introduction cost At is 6,176,691 yen and, for example, the post-introduction unit price Ac is calculated to 240.4 yen.

Subsequently, to the introduction level calculating unit 133, the total number of processes X and the cost reduction rate R is input from the input unit 101. Furthermore, to the introduction level calculating unit 133, the pre-introduction cost Bt and the pre-introduction unit price Bc are input from the first cost calculating unit 131. Furthermore, to the introduction level calculating unit 133, the post-introduction cost At and the post-introduction unit price Ac are input from the second cost calculating unit 132. The introduction level calculating unit 133 substitutes each of the input parameters into the equation (1) above and calculates the ICT introduction level Le (Step S133). Here, in the example illustrated in FIG. 5, if the number of times is "1", for example, the ICT introduction level Le is calculated to 25,693.

Furthermore, the introduction level calculating unit 133 calculates the total cost as the sum of the pre-introduction cost Bt and the post-introduction cost At (Step S134). Here, in the example illustrated in FIG. 5, if the number of times is "1", for example, the total cost is calculated to 18,972,000 yen. The introduction level calculating unit 133 outputs the calculated ICT introduction level Le to the determination unit 134 and the environmental load calculating unit 135. Furthermore, the introduction level calculating unit 133 stores the calculated ICT introduction level Le and the total cost in the result storing unit 124. If the cost calculation process is completed, the information processing apparatus 100 returns to the previous process. In this way, with the cost calculation process, it is possible to calculate the cost in accordance with the ICT introduction level Le and calculate the subsequent ICT introduction level Le.

A description will be given here by referring back to FIG. 8. If the cost calculation process has been completed, the information processing apparatus 100 performs the environmental load calculation process on the ICT introduction level Le that is used for the cost calculation process (Step S14). In the following, the environmental load calculation process will be described with reference to FIG. 10. FIG. 10 is a flowchart illustrating an example of an environmental load calculation process.

To the environmental load calculating unit 135 in the information processing apparatus 100, a time delay coefficient is input from the input unit 101 (Step S141). Furthermore, to the environmental load calculating unit 135, in addition to the time delay coefficient, the total number of processes X and the amount of activity are input from the input unit 101. Furthermore, to the environmental load calculating unit 135, the ICT introduction level Le is input from the introduction level calculating unit 133.

The environmental load calculating unit 135 calculates the energy consumption before and after the ICT introduction on the basis of the amount of activity that is in accordance with the ICT introduction level Le and on the basis of the time delay coefficient related to the environmental load. The environmental load calculating unit 135 calculates, as the environmental load, for example, pre-introduction $CO_2$ emissions and the post-introduction $CO_2$ emissions of ICT on the basis of both the calculated energy consumption before and after the ICT introduction and the basic unit data for converting an amount of energy stored in the environmental load DB 122 to the environmental load. The environmental load calculating unit 135 calculates the total $CO_2$ emissions as the sum of the calculated pre-introduction $CO_2$ emissions and the post-introduction $CO_2$ emissions (Step S142). Here, in the example illustrated in FIG. 5, if the number of times is "1", for example, the pre-introduction $CO_2$ emissions is calculated to 2,752 kg and, for example, the post-introduction $CO_2$ emissions to 3431 kg and the total $CO_2$ emissions is calculated to 6,183 kg. The environmental load calculating unit 135 stores the calculated pre-introduction $CO_2$ emissions, the post-introduction $CO_2$ emissions, and the total $CO_2$ emissions in the result storing unit 124. If the environmental load calculation process is completed, the information processing apparatus 100 returns to the previous process. In this way, according to the environmental load calculation process, it is possible to calculate the environmental load that is in accordance with the ICT introduction level Le.

A description will be given here by referring back to FIG. 8. If the environmental load calculation process has been completed and the ICT introduction level Le is input from the introduction level calculating unit 133, the determination unit 134 in the information processing apparatus 100 increments i that counts the number of calculations (Step S15). The determination unit 134 determines whether the number of repetitions corresponding to the repetitions of calculation of the ICT introduction level Le is performed (Step S16). If the calculation of the ICT introduction level Le is not repeated by the determined number of times of repetitions (No at Step S16), the determination unit 134 outputs the ICT introduction level Le to the first cost calculating unit 131 and the second cost calculating unit 132. Furthermore, the determination unit 134 stores the number of times of repetitions in the result storing unit 124. Subsequently, after the determination unit 134 outputs the ICT introduction level Le, the determination unit 134 returns to Step S13 and repeats the cost calculation process and the environmental load calculation process.

If the calculation of the ICT introduction level Le is repeated by the determined number of times of repetitions (Yes at Step S16), the determination unit 134 instructs the effect calculating unit 136 to calculate the effect (Step S17).

If the effect calculating unit 136 is instructed to calculate the effect from the determination unit 134, the effect calculating unit 136 calculates the effect before and after the ICT introduction and creates the effect data (Step S18). To the effect calculating unit 136, the calculation period is input from the input unit 101. The effect calculating unit 136 reads, from the result storing unit 124, the pre-introduction cost Bt, the post-introduction cost At, the total cost, the pre-introduction $CO_2$ emissions, the post-introduction $CO_2$ emissions, and the total $CO_2$ emissions and creates various kinds of graphs on the basis of the calculation period. The effect calculating unit 136 creates by using, for example, the pre-introduction cost Bt and the total cost, each of the graphs of, for example, 10 years as the calculation period.

The effect calculating unit 136 calculates, by, for example, integrating, both an area of a graph in the calculation period when the cost is pre-introduction cost Bt and is not changed and an area of a graph of the total cost in a calculation period when ICT is introduced. The effect calculating unit 136 calculates, on the basis of each of the calculated areas, the result of a cost reduction rate that indicates an amount of cost reduced if ICT is introduced. The effect calculating unit 136 creates the result of the cost reduction rate as the effect data.

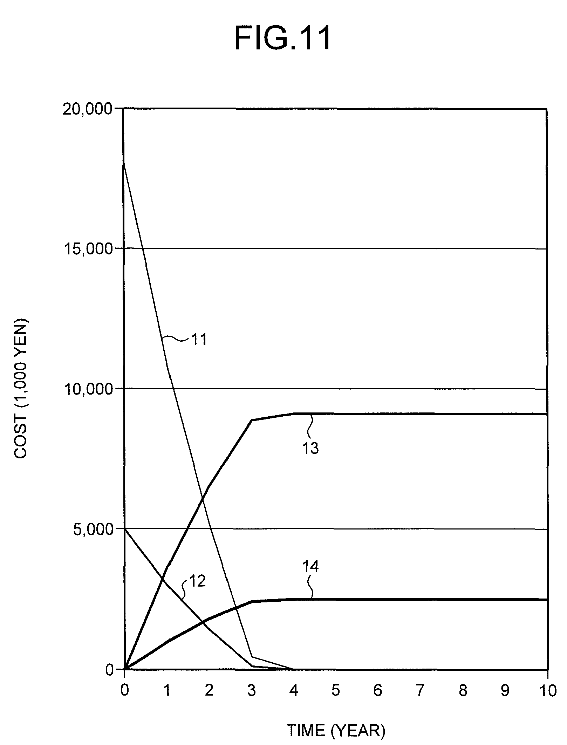

In the following, each of the graphs will be described with reference to FIG. 11 to FIG. 14. FIG. 11 is a graph illustrating an example of a change due to the time of each of the cost factors. FIG. 11 illustrates a change in cost related to each of the cost factors that are the breakdown of the costs calculated in the embodiment described above. Furthermore, the cost factors with a small vale are omitted. A graph 11 illustrated in FIG. 11 indicates the labor cost before the ICT introduction and a graph 12 indicates a facility cost. Furthermore, a graph 13 indicates a labor cost after the ICT introduction and a graph 14 indicates a facility cost.

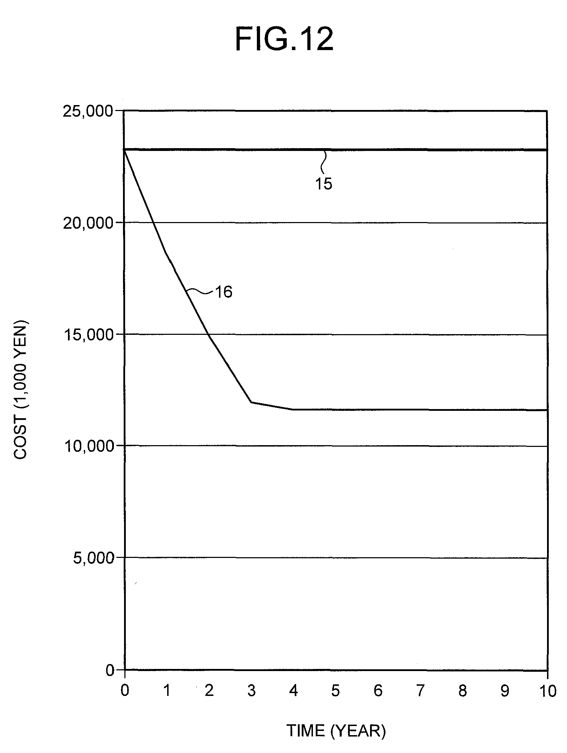

FIG. 12 is a graph illustrating an example of the cost reduction effect due to ICT introduction. FIG. 12 indicates the result of the calculated cost reduction rate. A graph 15 illustrated in FIG. 12 indicates a case in which ICT is not introduced in the calculation period, i.e., indicates a graph of the cost that is the pre-introduction cost Bt and that is not changed. A graph 16 illustrated in FIG. 12 indicates the graph of a cost when ICT is introduced as the cost reduction rate of 20%. The result of the cost reduction rate can be calculated on the basis of the ratio of the area obtained by integrating the years 0 to 10 in the graph 15 to the area obtained by integrating the years 0 to 10 in the graph 16. The example illustrated in FIG. 12 indicates that, as the result of the cost reduction rate, the electronic application process scenario can reduce $CO_2$ emissions by the cumulative total of 41% in 10 years with respect to the paper application process scenario.

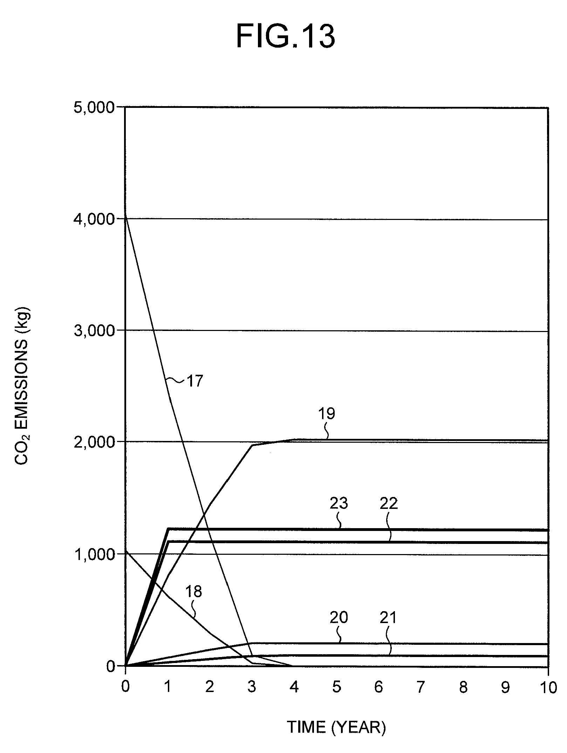

FIG. 13 is a graph illustrating an example of a change in each of the $CO_2$ factors due to time. FIG. 13 illustrates a change in $CO_2$ emissions related to each of the $CO_2$ factors that are the breakdown of the $CO_2$ emissions calculated in the embodiment described above. Furthermore, the $CO_2$ factors with a small value are omitted. In FIG. 13, a graph 17 indicates the $CO_2$ emissions related to an office before the ICT introduction and a graph 18 indicates the $CO_2$ emissions related to production of paper. Furthermore, a graph 19 indicates the $CO_2$ emissions related to an office after the ICT introduction, a graph 20 indicates the $CO_2$ emissions related to a PC, and a graph 21 indicates the $CO_2$ emissions related to the Internet. Furthermore, a graph 22 indicates the $CO_2$ emissions related to a server and a graph 23 indicates the $CO_2$ emissions related to air conditioning or the like in a data center.

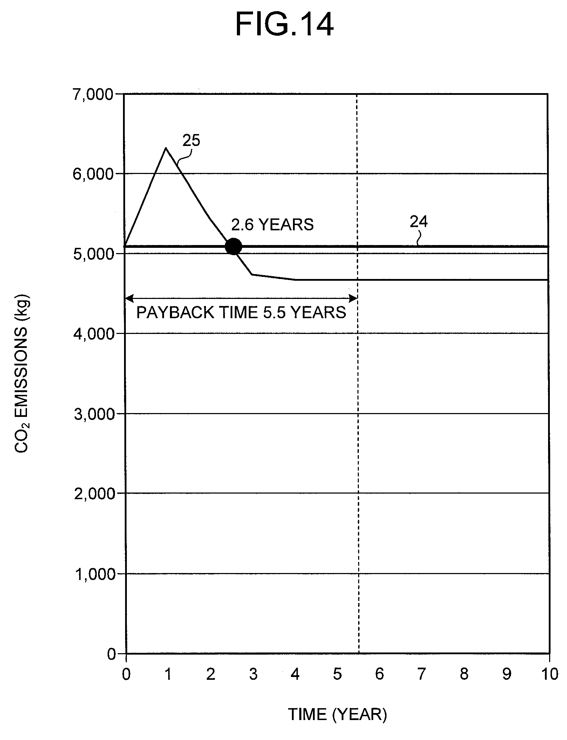

FIG. 14 is a graph illustrating an example of the $CO_2$ reduction effect due to the ICT introduction. A graph 24 illustrated in FIG. 14 indicates a graph of the $CO_2$ emissions in a case in which ICT is not introduced in the calculation period, i.e., in a case in which the $CO_2$ emissions that is the environmental load is not changed. Furthermore, a graph 25 indicates a graph of the $CO_2$ emissions when ICT is introduced as the cost reduction rate of 20%. Similarly to the case of the cost, the reduction effect of the $CO_2$ emissions can be calculated on the basis of the ratio of an area obtained by integrating the years 0 to 10 in the graph 24 to the area obtained by integrating the years 0 to 10 in the graph 25. The example illustrated in FIG. 14 indicates that, as the reduction effect of the $CO_2$ emissions, the electronic application process scenario can reduce the $CO_2$ emissions by cumulative total of 3.7% in 10 years with respect to the paper application process scenario. Furthermore, at the beginning of ICT introduction, from the graph 25, the $CO_2$ emissions from the electronic application process scenario exceeds the $CO_2$ emissions from the paper application process scenario; however, the relationship is inverted after 2.6 years after the ICT introduction. Furthermore, the payback time is the time at which the cumulative total of the $CO_2$ emissions from the electronic application process scenario becomes equal to the cumulative total of the $CO_2$ emissions from the paper application process scenario. The payback time is, in the example illustrated in FIG. 14, for example, 5.5 years.

The effect calculating unit 136 outputs, for example, the pre-introduction cost Bt, the post-introduction cost At, the total cost, the pre-introduction $CO_2$ emissions, the post-introduction $CO_2$ emissions, and the total $CO_2$ emissions to the output unit 102 as the result data of the ICT introduction level. Furthermore, the effect calculating unit 136 outputs both the various kinds of graphs that are created on the basis of the result data and the created effect data to the output unit 102. The output unit 102 outputs the result data of the ICT introduction level, the effect data that indicates the effect before and after the ICT introduction, and the graphs on the basis of the result data and then ends the process. In this way, the information processing apparatus 100 repeatedly calculates the ICT introduction level Le. Namely, by feeding back the immediately previous ICT introduction level Le in order to calculate the immediately subsequent ICT introduction level Le, the information processing apparatus 100 can easily calculate the ICT introduction level needed for the cost reduction plan for each, for example, year of introduction.

In the following, a description will be given of a case in which, in the embodiment described above, an energy saving server that can reduce electrical power consumption by 10% is introduced in a midpoint of the calculation period, for example, is introduced from the 6$^{th}$ year after 5 years have elapsed. Regarding the introduction of the energy saving server starting from the 6$^{th}$ year, the time of the time delay coefficient can be represented by "5 years" and the cost reduction rate can be represented by "10%".

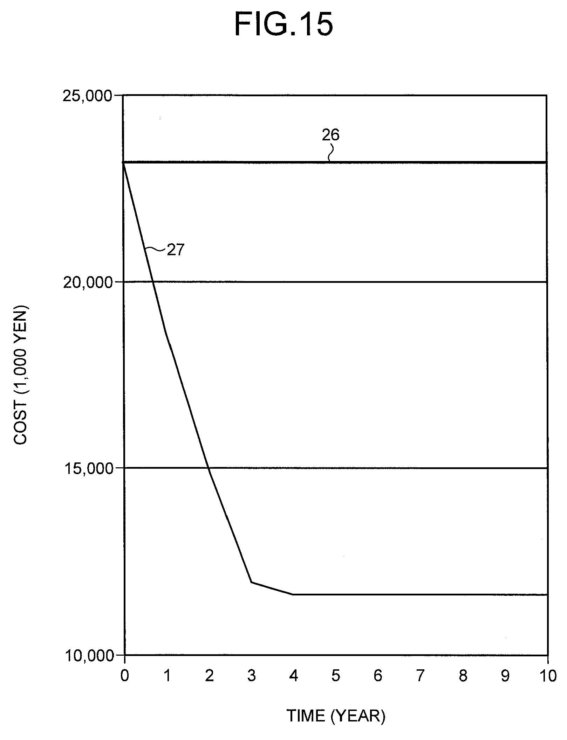

FIG. 15 is a graph illustrating an example of the cost reduction effect due to an introduction of an energy saving server. A graph 26 illustrated in FIG. 15 indicates a graph of a case in which ICT is not introduced in the calculation period, i.e., a case in which a cost that is the pre-introduction cost Bt and that is not changed. A graph 27 illustrated in FIG. 15 indicates a graph of a cost of a case in which ICT is introduced as the cost reduction rate of 20% and the energy saving server is introduced from the 6$^{th}$ year. In the example illustrated in FIG. 15, as indicated by the graph 27, a change in the operational cost does not almost appear even if an energy saving server is introduced. Furthermore, in FIG. 15, only the operational cost is illustrated and the introduction cost of the energy saving server is not included. The result of the cost reduction rate indicates that, similarly to the example illustrated in FIG. 12, the reduction is possible by cumulative total of 41% in 10 years.

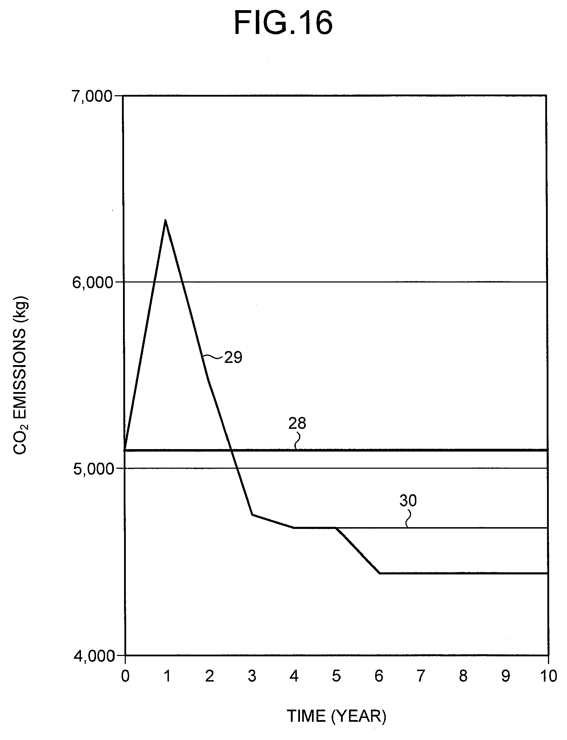

FIG. 16 is a graph illustrating an example of the $CO_2$ reduction effect due to the introduction of the energy saving server. A graph 28 illustrated in FIG. 16 indicates a graph of a cost in a case in which ICT is not introduced in the calculation period, i.e., a case in which the cost is the pre-introduction cost Bt and is not changed. A graph 29 illustrated in FIG. 16 indicates a graph of $CO_2$ emissions in a case in which ICT is introduced as the cost reduction rate of 20% and an energy saving server is introduced from the 6$^{th}$ year. Furthermore, a graph 30 indicates a graph of the $CO_2$ emissions in a case in which ICT is introduced as the cost reduction rate of 20% and an energy saving server is not introduced in the 6$^{th}$ year. In the example illustrated in FIG. 16, as indicated by the graph 29, by introducing the energy saving server, a difference with the graph 30 occurs after 6 years. Namely, in the electronic application process scenario, by introducing the energy saving server after 6 years, the reduction effect of the $CO_2$ emissions is further increased by 1.4% in cumulative total. Namely, the electronic application process scenario indicates that it is possible to reduce by 5.1% in cumulative total in 10 years with respect to the paper application process scenario.

As described above, the information processing apparatus 100 calculates a cost of the first process on the basis of both the number of processes performed in the first process and the cost database that stores therein the unit price of cost factors. Furthermore, the information processing apparatus 100 calculates a cost of the second process on the basis of the number of processes performed by, instead of the first process, the second process that is performed by the ICT apparatus and on the basis of the cost database. Furthermore, the information processing apparatus 100 calculates an introduction level of the second process needed for the cost reduction on the basis of both the cost of the first process and the cost of the second process. Consequently, it is possible to calculate the ICT introduction level needed for the cost reduction plan.

Furthermore, for the process of calculating an introduction level of the second process, the information processing apparatus 100 calculates, as an introduction level of the second process, an introduction level of the second process by using the equation (1) described above. Consequently, it is possible to calculate an ICT introduction level Le needed for the cost reduction plan on the basis of the pre-introduction cost Bt of ICT, the post-introduction cost At, the cost reduction rate R, the pre-introduction unit price Bc, the post-introduction unit price Ac, and the total number of processes X before the ICT introduction.

Furthermore, as the process of calculating a cost of the first process, the information processing apparatus 100 uses, as the number of processes in the first process, the number of processes obtained by subtracting an introduction level of the second process, which is calculated from a process of calculating an introduction level of the second process, from the total number of processes of pre-introduction of the second process. The information processing apparatus 100 calculates a cost of the first process by using the number of processes. Furthermore, as the process of calculating a cost of the second process, the information processing apparatus 100 calculates a cost of the second process by using, as the number of processes in the second process, the number of processes of the introduction level of the second process calculated from the process of calculating the second process. Furthermore, the information processing apparatus 100 further determines whether the process of calculating the cost of the first process, the process of calculating the cost of the second process, and the process of calculating the introduction level of the second process are repeated by the predetermined number of times. Consequently, it is possible to calculate the ICT introduction level Le for each term of the cost reduction plan. Furthermore, by calculating the environmental load in combination, it is possible to grasp the emission behavior of the temporal environmental load and perform a long-term reduction in cost and environmental load as planned. Consequently, it is possible to easily determine the introduction of ICT including investment in ICT.

Furthermore, the information processing apparatus 100 calculates the cost of the first process on the basis of both the number of processes in the first process and the cost database that stores therein the unit price of the cost factors. Furthermore, instead of the first process, the information processing apparatus 100 calculates the cost of the second process on the basis of both the number of processes in the second process performed by the ICT apparatus and the cost database. Furthermore, the information processing apparatus 100 calculates the introduction level of the second process needed for the cost reduction on the basis of both the cost of the first process and the cost of the second process. Furthermore, the information processing apparatus 100 calculates the energy consumption on the basis of both the amount of activity in accordance with the introduction level of the second process and the time delay coefficient related to the environmental load. Furthermore, the information processing apparatus 100 calculates the environmental load on the basis of both the calculated energy consumption and the environmental load database that stores therein the basic unit data for converting energy consumption to an environmental load. Consequently, it is possible to calculate an environmental load that is in accordance with the ICT introduction level needed for the cost reduction plan.

Furthermore, in the embodiment described above, as the ICT introduction level Le, the number of processes of sales slips of clerical works is calculated; however, the embodiment is not limited to this. The information processing apparatus 100 can calculate, as ICT introduction level Le, for example, the number of persons, a traffic amount in a network, or the like, may be used as long as the items can be used as an index of introduction of ICT. Consequently, it is possible to calculate an ICT introduction level needed for the cost reduction plan related to an introduction of ICT in various kinds of business fields.

Furthermore, in the embodiment described above, seven items, such as the "use of material" or the like illustrated in FIG. 6, are described as the cost factors; however, the cost factors are not limited to these. The information processing apparatus 100 may also use an arbitrary item, such as a use area of the office, tax, or the like, as the cost factor. Consequently, it is possible to calculate an ICT introduction level needed for the cost reduction plan by taking into consideration the cost factor needed by a user.

The components of each unit illustrated in the drawings are not always physically configured as illustrated in the drawings. In other words, the specific shape of a separate or integrated unit is not limited to the drawings; however, all or part of the unit can be configured by functionally or physically separating or integrating any of the units depending on various loads or use conditions. For example, the determination unit 134 and the effect calculating unit 136 described in the above embodiment may also be integrated. Furthermore, for example, the cost DB 121, the environmental load DB 122, and the basic data storing unit 123 described in the above embodiment may also be integrated as a single database.

Furthermore, all or any part of various kinds of the processing functions performed by each unit may also be executed by a CPU (or a microcomputer, such as an MPU, a micro controller unit (MCU), or the like). Furthermore, all or any part of various kinds of the processing functions may also be, of course, executed by programs analyzed and executed by the CPU (or the microcomputer, such as the MPU or the MCU), or executed by hardware by wired logic.

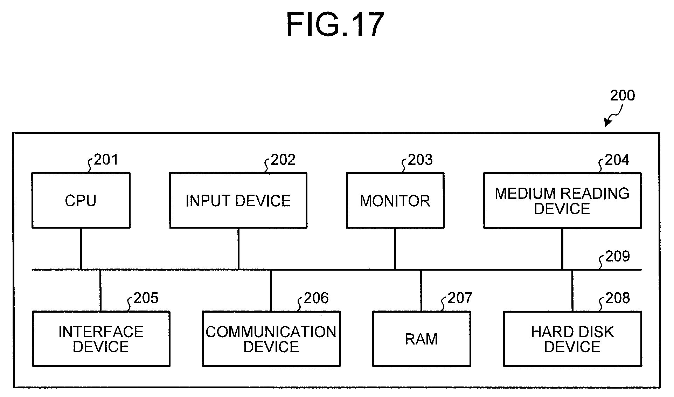

Various kinds of processes described in the above embodiment can be implemented by programs prepared in advance and executed by a computer. Accordingly, in the following, a computer that executes programs having the same function as that described in the embodiment described above will be described as an example. FIG. 17 is a block diagram illustrating an example of a computer that executes an information processing program.

As illustrated in FIG. 17, a computer 200 includes a CPU 201 that executes various kinds of arithmetic processing, an input device 202 that accepts an input of data from a user, and a monitor 203. Furthermore, the computer 200 includes a medium reading device 204 that reads a program or the like from a storage medium, an interface device 205 that connects to another device, and a communication device 206 that connects to the other device in a wireless manner. Furthermore, the computer 200 includes a RAM 207 that temporarily stores therein various kinds of information and a hard disk device 208. Furthermore, each of the devices 201 to 208 are connected to a bus 209.

The hard disk device 208 stores therein an information processing program having the same function as that performed by each of the processing units, such as the first cost calculating unit 131, the second cost calculating unit 132, the introduction level calculating unit 133, the determination unit 134, the environmental load calculating unit 135, and the effect calculating unit 136, illustrated in FIG. 1. Furthermore, the hard disk device 208 stores therein the cost DB 121, the environmental load DB 122, the basic data storing unit 123, and the result storing unit 124. Furthermore, the hard disk device 208 stores therein various kinds of data that implements the information processing program. The input device 202 has the same function as that performed by the input unit 101 illustrated in FIG. 1. The monitor 203 has the same function as that performed by the output unit 102 illustrated in FIG. 1. The interface device 205 has the same function as that performed by the output unit 102 illustrated in FIG. 1 and serves, if, for example, a printer is connected, as a unit integrated with the printer. The communication device 206 has the same function as that performed by the input unit 101 and the output unit 102 when, for example, a user remotely accesses the computer 200.

The CPU 201 reads each of the programs stored in the hard disk device 208 and loads the programs in the RAM 207, thereby executing various kinds of processes. Furthermore, these programs allow the computer 200 to function as the first cost calculating unit 131, the second cost calculating unit 132, the introduction level calculating unit 133, the determination unit 134, the environmental load calculating unit 135, and the effect calculating unit 136 illustrated in FIG. 1.

Furthermore, the information processing program described above is not always stored in the hard disk device 208. For example, the computer 200 may also read and execute the program stored in a storage medium that can be read by the computer 200. Examples of the computer 200 readable storage medium include a portable recording medium, such as a CD-ROM, a DVD disk, a universal serial bus (USB) memory, or the like, a semiconductor memory, such as a flash memory or the like, and a hard disk drive. Furthermore, the information processing program may also be stored in a device connected to, for example, a public circuit, the Internet, a local area network (LAN), a wide area network (WAN), or the like and the computer 200 may also read and execute the information processing program from the recording medium described above.

Reference Signs List

| | |
|---|---|
| 100 | information processing apparatus |
| 101 | input unit |
| 102 | output unit |
| 120 | storing unit |
| 121 | cost database |
| 122 | environmental load database |
| 123 | basic data storing unit |
| 124 | result storing unit |
| 130 | control unit |
| 131 | the first cost calculating unit |
| 132 | the second cost calculating unit |
| 133 | introduction level calculating unit |
| 134 | determination unit |
| 135 | environmental load calculating unit |
| 136 | effect calculating unit |

**Claims**

1. An information processing method comprising:

calculating, performed by a computer, a cost of a first process on the basis of a number of processes performed by the first process and a cost database that stores therein a unit price of cost factors;

calculating, performed by the computer, a cost of a second process on the basis of the number of processes performed by, instead of the first process, the second process that is performed by an ICT apparatus and the cost database; and

calculating, performed by the computer, an introduction level of the second process needed for cost reduction on the basis of the cost of the first process and the cost of the second process.

2. The information processing method according to claim 1, wherein the calculating the introduction level of the second process includes calculating the introduction level of the second process by using equation (1) below as the introduction level of the second process:

$$Le = \{(Bt + At) \times (1 - R) - Bc \cdot X\}/(Ac - Bc) \qquad (1)$$

where, in the equation (1), Le represents the introduction level of the second process, Bt represents the cost of the first process, At represents the cost of the second process, R represents a cost reduction rate, Bc represents the unit price of the first process, X represents a total number of processes of the second process before introduction, and Ac represents the unit price of the second process.

3. The information processing method according to claim 2, wherein

the calculating the cost of the first process includes calculating the cost of the first process by using, as the number of processes performed by the first process, the number of processes obtained by subtracting the introduction level of the second process calculated at the calculating the introduction level of the second process from the total number of processes of the second process before the introduction, and

the calculating the cost of the second process includes calculating the cost of the second process by using, as the number of processes performed by the second process, the number of processes of the introduction level of the second process calculated at the calculating the introduction level of the second process, and further comprising:

determining, performed by the computer, whether the process of calculating the cost of the first process, the process of calculating the cost of the second process, and the process of calculating the introduction level of the second process are repeated by predetermined number of times.

4. An information processing method comprising:

calculating, performed by a computer, a cost of a first process on the basis of a number of processes performed by the first process and a cost database that stores therein a unit price of cost factors;

calculating, performed by the computer, a cost of a second process on the basis of the number of processes performed by, instead of the first process, the second process that is performed by an ICT apparatus and the cost database;

calculating, performed by the computer, an introduction level of the second process needed for cost reduction on the basis of the cost of the first process and the cost of the second process; and

calculating, performed by the computer, energy consumption on the basis of an amount of activity that is in accordance with the introduction level of the second process and on the basis of a time delay coefficient related to an environmental load and calculating, performed by the computer, the environmental load on the basis of the calculated energy consumption and an environmental load database that stores therein basic unit data for converting the energy consumption to the environmental load.

5. An information processing apparatus comprising:

a cost database that stores therein a unit price of cost factors;

a first cost calculating unit that calculates a cost of a first process on the basis of a number of processes performed by the first process and the cost database;

a second cost calculating unit that calculates a cost of a second process on the basis of the number of processes performed by, instead of the first process, the second process performed by an ICT apparatus and the cost database; and

an introduction level calculating unit that calculates an introduction level of the second process needed for cost reduction on the basis of the cost of the first process and the cost of the second process.

6. An information processing program causing a computer to execute a process comprising:

calculating a cost of a first process on the basis of a number of processes performed by the first process and a cost database that stores therein a unit price of cost factors;
calculating a cost of a second process on the basis of the number of processes performed by, instead of the first process, the second process that is performed by an ICT apparatus and the cost database; and
calculating an introduction level of the second process needed for cost reduction on the basis of the cost of the first process and the cost of the second process.

7. An information processing apparatus comprising:

a cost database that stores therein a unit price of cost factors;
an environmental load database that stores therein basic unit data for converting energy consumption to an environmental load;
a first cost calculating unit that calculates a cost of a first process on the basis of a number of processes performed by the first process and the cost database;
a second cost calculating unit that calculates a cost of a second process on the basis of the number of processes performed by, instead of the first process, the second process performed by an ICT apparatus and the cost database;
an introduction level calculating unit that calculates an introduction level of the second process needed for cost reduction on the basis of the cost of the first process and the cost of the second process; and
an environmental load calculating unit that calculates energy consumption on the basis of the amount of activity that is in accordance with the introduction level of the second process and on the basis of a time delay coefficient related to the environmental load and that calculates an environmental load on the basis of the calculated energy consumption and the environmental load database.

8. An information processing program causing a computer to execute a process comprising:

calculating a cost of a first process on the basis of a number of processes performed by the first process and a cost database that stores therein a unit price of cost factors;
calculating a cost of a second process on the basis of the number of processes performed by, instead of the first process, the second process that is performed by an ICT apparatus and the cost database;
calculating an introduction level of the second process needed for cost reduction on the basis of the cost of the first process and the cost of the second process; and
calculating energy consumption on the basis of an amount of activity that is in accordance with the introduction level of the second process and a time delay coefficient related to an environmental load and calculating the environmental load on the basis of the calculated energy consumption and an environmental load database that stores therein basic unit data for converting the energy consumption to the environmental load.

# FIG.1

INFORMATION PROCESSING APPARATUS ⌐100

CONTROL UNIT ⌐130

STORING UNIT ⌐120

INPUT UNIT ⌐101

OUTPUT UNIT ⌐102

FIRST COST CALCULATING UNIT ⌐131

SECOND COST CALCULATING UNIT ⌐132

INTRODUCTION LEVEL CALCULATING UNIT ⌐133

DETERMINATION UNIT ⌐134

ENVIRONMENTAL LOAD CALCULATING UNIT ⌐135

EFFECT CALCULATING UNIT ⌐136

COST DATABASE ⌐121

ENVIRONMENTAL LOAD DATABASE ⌐122

BASIC DATA STORING UNIT ⌐123

RESULT STORING UNIT ⌐124

# FIG.2

| | COST FACTOR | UNIT COST | ... |
|---|---|---|---|
| BEFORE ICT INTRO-DUCTION | PAPER | 0.42 YEN/SHEET | ... |
| | LABOR COST (WITHOUT ICT) | 2228 YEN/PERSON & TIME | ... |
| | FACILITY (OFFICE) | 99800 YEN/m$^2$ | ... |
| | ... | ... | ... |
| AFTER ICT INTRO-DUCTION | LABOR COST (WITH ICT) | 2228 YEN/PERSON & TIME | ... |
| | FACILITY (OFFICE) | 99800 YEN/m$^2$ | ... |
| | USE OF PC | 16.2 YEN/kWh | ... |
| | INTERNET | 0.111 YEN/MB | ... |
| | SERVER | 16.2 YEN/kWh | ... |
| | FACILITY (DATA CENTER) | 16.2 YEN/kWh | ... |
| | ... | ... | ... |

121a   121b   121

# FIG.3

| | COST FACTOR | UNIT $CO_2$ EMISSIONS | ... |
|---|---|---|---|
| BEFORE ICT INTRO-DUCTION | PAPER | 0.0062 kg-$CO_2$/SHEET | ... |
| | LABOR COST (WITHOUT ICT) | – | ... |
| | FACILITY (OFFICE) | 81.2 kg-$CO_2$/m$^2$ | ... |
| | ... | ... | ... |
| AFTER ICT INTRO-DUCTION | LABOR COST (WITH ICT) | – | ... |
| | FACILITY (OFFICE) | 81.2 kg-$CO_2$/m$^2$ | ... |
| | USE OF PC | 0.51 kg-$CO_2$/kWh | ... |
| | INTERNET | 0.0035 kg-$CO_2$/MB | ... |
| | SERVER | 0.51 kg-$CO_2$/kWh | ... |
| | FACILITY (DATA CENTER) | 0.51 kg-$CO_2$/kWh | ... |
| | ... | ... | ... |

122a     122b     122

# FIG.4

| | COST FACTOR | BASIC DATA | ... |
|---|---|---|---|
| **BEFORE ICT INTRO-DUCTION** | PAPER | 3 SHEETS/PROCESS | ... |
| | LABOR COST (WITHOUT ICT) | 0.15 HOURS/PROCESS | ... |
| | FACILITY (OFFICE) | 12.5 m²/PERSON | ... |
| | ... | ... | ... |
| **AFTER ICT INTRO-DUCTION** | LABOR COST (WITH ICT) | 0.07 HOURS/PROCESS | ... |
| | FACILITY (OFFICE) | 12.5 m²/PERSON | ... |
| | USE OF PC | 0.1 kW/PC | ... |
| | INTERNET | 0.5 MB/PROCESS | ... |
| | SERVER | 0.25 kW/PC | ... |
| | FACILITY (DATA CENTER) | 2.1 PUE | ... |
| | ... | ... | ... |

# FIG.5

EP 3 067 838 A1

| | 124a | 124b | 124c | 124d | 124e | 124f | 124g | 124h | |
|---|---|---|---|---|---|---|---|---|---|
| | NUMBER OF TIMES | Le (CASES) | Bt (YEN) | At (YEN) | TOTAL COST (YEN) | PRE-INTRODUCTION $CO_2$ EMISSIONS (kg) | POST-INTRODUCTION $CO_2$ EMISSIONS (kg) | TOTAL $CO_2$ EMISSIONS (kg) | ... |
| | 0 | 0 | 23,715,000 | 0 | 23,715,000 | 5,100 | 0 | 5,100 | ... |
| | 1 | 25,693 | 12,795,309 | 6,176,691 | 18,972,000 | 2,752 | 3431 | 6,183 | ... |
| | 2 | 46,248 | 4,059,556 | 11,118,044 | 15,177,600 | 873 | 4299 | 5,172 | ... |
| | 3 | 55,800 | 0 | 13,414,320 | 13,414,320 | 0 | 4702 | 4,702 | ... |
| | 4 | 55,800 | 0 | 13,414,320 | 13,414,320 | 0 | 4702 | 4,702 | ... |
| | 5 | 55,800 | 0 | 13,414,320 | 13,414,320 | 0 | 4702 | 4,702 | ... |
| | 6 | 55,800 | 0 | 13,414,320 | 13,414,320 | 0 | 4702 | 4,702 | ... |
| | 7 | 55,800 | 0 | 13,414,320 | 13,414,320 | 0 | 4702 | 4,702 | ... |
| | 8 | 55,800 | 0 | 13,414,320 | 13,414,320 | 0 | 4702 | 4,702 | ... |
| | 9 | 55,800 | 0 | 13,414,320 | 13,414,320 | 0 | 4702 | 4,702 | ... |
| | 10 | 55,800 | 0 | 13,414,320 | 13,414,320 | 0 | 4702 | 4,702 | ... |
| | ... | ... | ... | ... | ... | ... | ... | ... | ... |

124

# FIG.6

| COST FACTOR | AMOUNT OF ACTIVITY (A) | UNIT PRICE OF COST FACTOR (B) | TIME DELAY | TIME (YEAR) | COST REDUCTION RATE (%) | ... |
|---|---|---|---|---|---|---|
| USE OF MATERIAL | AMOUNT OF MATERIAL USED (WEIGHT OR NUMBER OF SHEETS) | YEN/WEIGHT OR NUMBER OF SHEETS | – | – | – | ... |
| MOVE OF PERSON | TRAVEL DISTANCE OF PERSON (PERSON & km) | YEN/PERSON & km | – | – | – | ... |
| MOVE OF MATERIAL | TRAVEL DISTANCE OF MATERIAL (t & km) | YEN/t & km | – | – | – | ... |
| HUMAN TASK | NUMBER OF TASK STEPS (PERSON & TIME) | YEN/PERSON & TIME | ENERGY EFFICIENCY | – | – | ... |
| STORAGE OF MATERIAL | STORAGE AREA OF MATERIAL ($m^2$ & YEAR) | YEN/$m^2$ & YEAR | ENERGY EFFICIENCY | – | – | ... |
| USE OF ICT APPARATUS | ELECTRICAL POWER CONSUMPTION (W & APPARATUS) | YEN/W & APPARATUS | REPLACEMENT OF APPARATUS | – | – | ... |
| DATA COMMU-NICATION | AMOUNT OF DATA COMMUNICATION (MB) | YEN/MB | REPLACEMENT OF APPARATUS | – | – | ... |
| ... | ... | ... | ... | ... | ... | ... |

# FIG.7

| COST FACTOR | AMOUNT OF ACTIVITY (A) | UNIT ENVIRONMENTAL LOAD OF COST FACTOR (C) | TIME DELAY | TIME (YEAR) | ENVIRONMENTAL LOAD REDUCTION RATE (%) | ... |
|---|---|---|---|---|---|---|
| USE OF MATERIAL | AMOUNT OF MATERIAL USED (WEIGHT OR NUMBER OF SHEETS) | ENVIRONMENTAL LOAD /WEIGHT OR NUMBER OF SHEETS | PRODUCTION MANAGEMENT | – | – | ... |
| MOVE OF PERSON | TRAVEL DISTANCE OF PERSON (PERSON & km) | ENVIRONMENTAL LOAD /PERSON & km | TIMETABLE REVISION | – | – | ... |
| MOVE OF MATERIAL | TRAVEL DISTANCE OF MATERIAL (t & km) | ENVIRONMENTAL LOAD /t & km | IMPROVEMENT OF FUEL EFFICIENCY | – | – | ... |
| HUMAN TASK | NUMBER OF TASK STEPS (PERSON & TIME) | ENVIRONMENTAL LOAD /PERSON & TIME | ENERGY EFFICIENCY | – | – | ... |
| STORAGE OF MATERIAL | STORAGE AREA OF MATERIAL ($m^2$ & YEAR) | ENVIRONMENTAL LOAD /$m^2$ & YEAR | ENERGY EFFICIENCY | – | – | ... |
| USE OF ICT APPARATUS | ELECTRICAL POWER CONSUMPTION (W & APPARATUS) | ENVIRONMENTAL LOAD /W & APPARATUS | REPLACEMENT OF APPARATUS | – | – | ... |
| DATA COMMU-NICATION | AMOUNT OF DATA COMMU-NICATION (MB) | ENVIRONMENTAL LOAD /MB | REPLACEMENT OF APPARATUS | – | – | ... |
| ... | ... | ... | ... | ... | ... | ... |

EP 3 067 838 A1

# FIG.8

```
        ┌──────────────────┐
        │     PROCESS      │
        │   PERFORMED      │
        │ BY INFORMATION   │
        │   PROCESSING     │
        │   APPARATUS      │
        └──────────────────┘
                 │
                 ▼
   ┌──────────────────────────┐
   │  INPUT DATA ON TARGET    │
   │ BUSINESS IN WHICH ICT IS │ ～S11
   │       INTRODUCED         │
   └──────────────────────────┘
                 │
                 ▼
   ┌──────────────────────────┐
   │        Le=0, i=0         │ ～S12
   └──────────────────────────┘
                 │
                 ▼
   ┌──────────────────────────┐
   │   COST CALCULATION       │ ～S13
   │      PROCESS             │
   └──────────────────────────┘
                 │
                 ▼
   ┌──────────────────────────┐
   │  ENVIRONMENTAL LOAD      │ ～S14
   │  CALCULATION PROCESS     │
   └──────────────────────────┘
                 │
                 ▼
   ┌──────────────────────────┐
   │         i=i+1            │ ～S15
   └──────────────────────────┘
                 │
                 ▼         S16
           ╱──────────╲          NO
          ╱ i>NUMBER OF ╲ ──────────┐
          ╲ REPETITIONS? ╱          │
           ╲──────────╱             │
                 │ YES              │
                 ▼                  │
   ┌──────────────────────────┐     │
   │     CALCULATE EFFECT     │ ～S17│
   └──────────────────────────┘     │
                 │                  │
                 ▼                  │
   ┌──────────────────────────┐     │
   │    CREATE EFFECT DATA    │ ～S18│
   └──────────────────────────┘     │
                 │
                 ▼
        ┌──────────────────┐
        │       END        │
        └──────────────────┘
```

# FIG.9

COST CALCULATION PROCESS

CALCULATE PRE-INTRODUCTION COST Bt RELATED TO NUMBER OF PROCESSES (X-Le) PERFORMED BY USING CONVENTIONAL PROCESS ～S131

CALCULATE POST-INTRODUCTION COST At RELATED TO NUMBER OF PROCESSES (Le) PERFORMED BY USING ICT ～S132

CALCULATE ICT INTRODUCTION LEVEL Le ～S133

CALCULATE TOTAL COST (Bt+At) ～S134

RETURN

# FIG.10

ENVIRONMENTAL LOAD CALCULATION PROCESS

INPUT TIME DELAY COEFFICIENT ～S141

CALCULATE ENVIRONMENTAL LOAD IN ACCORDANCE WITH ICT INTRODUCTION LEBEL Le ～S142

RETURN

# FIG.11

# FIG.12

# FIG.13

# FIG.14

# FIG.15

# FIG.16

# FIG.17

## INTERNATIONAL SEARCH REPORT

| International application No. |
| --- |
| PCT/JP2013/080149 |

**A. CLASSIFICATION OF SUBJECT MATTER**
*G06Q10/00*(2012.01)i

According to International Patent Classification (IPC) or to both national classification and IPC

**B. FIELDS SEARCHED**

Minimum documentation searched (classification system followed by classification symbols)
G06Q10/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | WO 2007/105698 A1  (Kyoto University),<br>20 September 2007 (20.09.2007),<br>claims 1 to 5; paragraphs [0129] to [0134]<br>(Family: none) | 1,5,6<br>4,7,8<br>2,3 |
| Y | JP 2006-178731 A  (Nippon Telegraph and Telephone Corp.),<br>06 July 2006 (06.07.2006),<br>claims 1 to 5<br>(Family: none) | 4,7,8 |
| Y | JP 2005-222187 A  (Hitachi, Ltd.),<br>18 August 2005 (18.08.2005),<br>claim 1; paragraphs [0006] to [0015]<br>(Family: none) | 4,7,8 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 December, 2013 (03.12.13) | 10 December, 2013 (10.12.13) |

| Name and mailing address of the ISA/<br>   Japanese Patent Office | Authorized officer |
| --- | --- |
| Facsimile No. | Telephone No. |

Form PCT/ISA/210 (second sheet) (July 2009)

**EP 3 067 838 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003058698 A
- JP 2005182451 A